# EUROPÄISCHE PATENTSCHRIFT

(11) **EP 4 227 068 B1**
(45) Veröffentlichungstag und Bekanntmachung des Hinweises auf die Patenterteilung: **11.12.2024**
(21) Anmeldenummer: 23150792.2
(22) Anmeldetag: 09.01.2023
(51) Int. Cl.: B29C 55/16, B29C 55/14, B29C 35/16, B29B 13/02, B29C 35/04

(54) **DÜSENKASTEN SOWIE EINE RECKANLAGE MIT EINEM ZUGEHÖRIGEN DÜSENKASTEN**
NOZZLE BOX AND STRETCHING DEVICE WITH ASSOCIATED NOZZLE BOX
BOÎTE À BUSES ET INSTALLATION D'ÉTIRAGE DOTÉE D'UNE BOÎTE À BUSES CORRESPONDANTE

(30) Priorität: 13.01.2022 DE 102022100704
(43) Veröffentlichungstag der Anmeldung: 16.08.2023
(73) Patentinhaber: Brückner Maschinenbau GmbH, 83313 Siegsdorf (DE)
(72) Erfinder: Tobias, Häusl, 83278 Traunstein (DE)
(74) Vertreter: Flach Bauer & Partner Patentanwälte mbB

(56) Entgegenhaltungen:
- CN-A- 103 206 845
- KR-A- 20110 102 194
- US-E- R E23 384

## Beschreibung

Die Erfindung betrifft einen Düsenkasten nach dem Oberbegriff des Anspruchs 1, sowie eine Reckanlage mit einem zugehörigen Düsenkasten.

Derartige Düsenkästen dienen beispielsweise zum Aufheizen oder Abkühlen von bahnförmigen Materialien, insbesondere in Form von Kunststofffolien bei der Kunststofffolienherstellung. Ein derartiger als Belüftungsdüse dienender Düsenkasten ist üblicherweise quer, d.h. in der Regel senkrecht zur Abzugsrichtung der Materialbahn und damit quer zur Bahnlaufrichtung oberhalb und/oder unterhalb der Materialbahn angeordnet.

Dabei können beispielsweise zwei oder mehrere derartiger Düsenkästen oberhalb wie unterhalb einer Materialbahn zu einem Belüftungsfeld zusammengefügt werden, nämlich unter Ausbildung eines sogenannten Belüftungsmoduls. Diese Belüftungsmodule einschließlich der zugehörigen Düsenkästen können dann beispielsweise eine sich quer über die Materialbahn erstreckende Länge von bis zu 1,5 m, 3 m, 5 m, 7,5 m oder beispielsweise auch bis zu 10 m und mehr aufweisen.

Je nach Einsatzzweck können über diese Belüftungsmodule, beispielsweise in einer Vorheizzone einer Reckanlage, die Luft und dadurch der Kunststofffilm erwärmt werden. Hierzu wird in der Regel die Luft über eine Heizung/ein Heizregister erwärmt und aufgeheizt. Wird das Belüftungsmodul in einer Kühlzone eingesetzt, kann über entsprechend abgekühlte Luft auch der Film abgekühlt werden. In diesem Falle wird meist die Umgebungsluft angesaugt und auf den Film geblasen. Möglich ist auch, dass die Luft im Vorfeld noch gekühlt wird oder dass ein Luftgemisch aus Umgebungsluft und Warmluft verwendet wird. Im Umluftbetrieb wird häufig kältere Luft (verglichen mit der Temperatur des Films) auf den Film geblasen.

Die Belüftungsmodule können geschlossen aufgebaut sein (Umluftsysteme) oder offen (Umgebungsluft wird genutzt). Bei der Erwärmung von Materialbahnen oder insbesondere von Kunststofffilmen wird häufig ein geschlossenes Belüftungssystem verwendet, welches Luft über seitlich angeordnete Ventilatoren in die Düsenkästen-Innenräume einbläst. Hierüber wird dann die Luft über Austrittsöffnungen oder Düsenöffnungen in den Düsenkästen in Richtung Materialbahn/Kunststofffolie ausgeblasen. Über bzw. unter den Düsenkästen kann die eingeblasene Luft zwischen diesen Kästen zurückströmen. Dazu können beispielsweise über oder unter den Düsenkästen sogenannte Rücksaugkästen vorgesehen sein, oder auch lediglich ein freier Raum, um dort die ausgeblasene Luft zurückzusaugen und in dem geschlossenen System wieder zu erwärmen und über die Ventilatoren den Düsenkästen erneut zuzuführen. Für die Erwärmung können beispielsweise Wärmetauscher verwendet werden. In diesem Umluftbetrieb kann also die Luft mehrmals umgewälzt werden.

Die erwähnten Belüftungsmodule mit den Düsenkästen werden bei einer bevorzugten Variante der Erfindung in Breitreckmaschinen bzw. Breitrecköfen, insbesondere für sequenzielle Folienreckanlagen oder auch in simultanen Folienreckanlagen eingesetzt.

Ein für die geschilderten Zwecke geeigneter Düsenkasten ist beispielsweise aus der EP 0 907 476 B1 bekannt geworden. Der hieraus bekannte Düsenkasten umfasst in seinem Inneren mehrere, in Längsrichtung des Düsenkastens verlaufende und miteinander verbundene Luftzufuhrkammern. Der Düsenkasten selbst weist eine Belüftung- oder Düsenwand oder -seite auf, in welcher in der Regel eine Vielzahl von Belüftungsöffnungen, also Austritts- oder Auslassöffnungen zum Ausblasen der Luft ausgebildet sind. Häufig sind dazu in mehreren parallel nebeneinanderliegenden Reihen eine Vielzahl von lochförmigen Belüftungsöffnungen ausgebildet. Die Düsenkästen sind dabei üblicherweise oberhalb und unterhalb der Materialbahn in einer Reckanlage so montiert, dass die sogenannte Belüftungs- oder Düsenwand der Materialbahn zugewandt ausgerichtet ist. Die Gestaltung der Austritts- oder Auslassöffnungen selbst kann dabei unterschiedlich ausgebildet sein, sodass sowohl lochförmige als auch beispielsweise Düsenkästen mit schlitzförmigen Austrittsöffnungen in Betracht kommen.

USRE23384E, KR20110102194A und CN103206845A sind weitere Dokumente, die Düsenkästen offenlegen.

Eine Luftdüseneinrichtung ist auch aus der CN 106003679 B bekannt geworden. Auf der Düsenaustrittsseite einer Düsenwand sind eine Vielzahl von Austrittsöffnungen ausgebildet, die auch in spezifischen Anordnungsmustern vorgesehen sein können. Um bestimmte Effekte zu erzielen sind auf der Innenseite der Düsen (also auf der zur Austrittsseite der Düsen entgegengesetzt liegenden Innenseite) zylinderförmige Erhebungen vorgesehen, wodurch die Düsenlänge vergrößert wird.

Der Vollständigkeit halber wird noch erwähnt, dass vor allem bei langen Düsenkästen diese produktionstechnisch bedingt aus zumindest zwei oder mehreren Teilen bestehen oder bestehen können, die beim Einsatz in einer Reckanlage in Längsrichtung zusammengebaut werden.

Insbesondere bei der Herstellung und dem Recken von Kunststofffilmen, die als Batterie-Separator-Folien eingesetzt werden sollen (also insbesondere bei einem sogenannten WET-Prozess), ist dem Material des zu reckenden Kunststofffilms eine Reihe von Zusatzstoffen und dabei insbesondere Öl beigemengt, welches wiederum aus dem Material der bewegten Materialbahn austritt und abgeschieden wird, wenn der Film während des Reckprozesses einen Ofen durchläuft. Dies führt dazu, dass sich das abscheidende Öl im Bereich der Belüftungswand des Düsenkastens ablagert, vor allem bei den unterhalb des fortbewegten Kunststofffilms positionierten Düsenkästen. Von dort kann das abgeschiedene Öl dann sogar über die Auslassöffnungen in das Innere des Düsenkanals gelangt.

Das Eindringen des Öls ist aber nicht auf die Auslassöffnungen beschränkt. Öl kann über alle nur denkbaren Öffnungen, Ausnehmungen oder Schlitze in das Innere des Düsenkastens gelangen, also beispielsweise auch über Flanschstellen, Verbindungsstellen von Blechen usw.

Dies führt dann dazu, dass das letztlich in das Innere des Düsenkastens gelangte Öl während des Betriebes durch die umgewälzte Luft teils wieder aufgenommen und mit ausgeblasen wird, mit der Folge, dass dieses Öl auf die Oberfläche des zu reckenden Kunststofffilms gelangt und dies zu einer unerwünschten Beeinträchtigung der Qualität des herzustellenden, d.h. zu reckenden Kunststofffilms führt. Von daher ist es Aufgabe der vorliegenden Erfindung, einen verbesserten Düsenkasten insbesondere für ein Belüftungsmodul sowie für eine Reckanlage mit derartigen Düsenkästen zu schaffen.

Die Aufgabe wird bezüglich des Belüftungsmoduls durch einen Düsenkasten mit den Merkmalen des Anspruchs 1 und bezüglich einer Reckanlage mit den Merkmalen gemäß Anspruch 12 gelöst. Vorteilhafte Ausgestaltungen der Erfindung sind in den Unteransprüchen angegeben.

Die erfindungsgemäße Lösung zeichnet sich vor allem dadurch aus, dass mittels einfacher Maßnahmen verhindert werden kann, dass Öl in den Bereich der Düsenöffnungen gelangen und darüber in das Inneren des Düsenkastens gelangen kann. Infolgedessen wird von daher auch vermieden, dass das durch die Düsenöffnungen austretende gasförmige Behandlungsmedium (in der Regel in Form von Luft) im Inneren des Düsenkastens abgelagertes Öl oder dort befindliche Öltröpfchen aufwirbelt und in Richtung Film mitnimmt, wodurch eine unerwünschte Ablagerung dieser Ölverunreinigung auf dem Kunststofffilm vermieden wird. Wenn an dieser Stelle oder auch später von "Film" gesprochen wird, so ist hierbei jedwede mögliche Materialbahn gemeint, unabhängig davon, ob sie als Kunststofffilm oder nur kurz als Film oder Folie etc. bezeichnet wird.

Erfindungsgemäß wird dies durch einen bevorzugt spezifisch gestalteten Erhebungsabschnitt gewährleistet, der um die Belüftungsöffnungen herumlaufend vorgesehen oder ausgebildet ist. Alternativ dazu oder bevorzugt ergänzend dazu weist die Belüftungswand eine spezifische Gestaltung mit in Querrichtung des Düsenkastens gegenüberliegenden Seitenflanschen auf, die die Seitenwände des Düsenkastens außerhalb des Innenraums des Düsenkastens übergreifen.

Dieser Erhebungsabschnitt wird durch einen einfachen Prägevorgang in der aus einer Blechwand bestehenden Belüftungswand des Düsenkastens eingebracht und von daher als Einprägung in dieser Blechwand ausgebildet. Mit anderen Worten können in den Düsenkästen die zugehörigen Belüftungsöffnungen mit den erwähnten Erhebungsabschnitten in einem einzigen, gleichzeitig durchgeführten Stanz- und/oder Prägevorgang erzeugt werden.

Die Form der Erhebungsabschnitte kann unterschiedlich gestaltet sein, wobei eine sich von der Ebene bzw. der Außenseite der Belüftungswand in Erhebungsrichtung zumindest leicht konisch verjüngende Außenbegrenzung der Belüftungserhebung bevorzugt ist. Die Ausbildung der Erhebungsabschnitte ist dabei bevorzugt, insbesondere im Falle von kreisförmigen Belüftungsöffnungen, kegelstumpfförmig, d.h. mit einer abgeflachten Stirnseite für die Erhebungsabschnitte, wobei dieser um die Belüftungsöffnungen umlaufende Stirnflächenabschnitt beispielsweise bei kreisförmigen oder ovalen Belüftungsöffnungen ein Breitenmaß aufweist, welches bevorzugt zwischen 0,5 mm bis 5 mm variieren kann.

Der Öffnungswinkel des Konus oder Kegels, also der Winkel der gegenüber der mehr oder weniger stark geneigten und die Belüftungsöffnungen umgebenden Außenbegrenzung der Erhebungsabschnitte muss gegenüber einer die Belüftungswand senkrecht durchsetzenden Geraden nur um kleinste Winkel abweichen, sodass gerade kein Zylinder mehr gebildet ist. Winkel von kleiner oder gleich 89,75 ° sind bereits günstig und weisen Vorteile für einen Prägevorgang auf. Der Winkel selbst kann aber auch kleinere Werte erreichen und annehmen, beispielsweise 45° und weniger. Alle Werte zwischen diesen Winkelangaben sind ebenfalls geeignet.

Ferner ist in einer bevorzugten Ausführungsform vorgesehen, dass die mit den Belüftungsöffnungen versehene Belüftungswand des Düsenkastens in Querrichtung des Düsenkastens durchgängig ausgebildet ist, also nicht durch mehrere, parallel in Längsrichtung des Düsenkastens nebeneinander verlaufende und seitlich miteinander verbundene Belüftungswand-Abschnitte zusammengesetzt ist. Dadurch wird verhindert, dass an den seitlichen Flanschen einer derartigen mehrteiligen Belüftungswand eines Düsenkastens Öl durch dort ausgebildete schlitzförmige Spalte ins Innere des Düsenkastens gelangen und von dort wiederum durch die zugeführte Luft über die Belüftungsöffnungen heraus in Richtung Kunststofffilm weitertransportiert werden kann.

Bevorzugt ist dazu die in Querrichtung des Düsenkastens durchgängige Belüftungswand außenliegend jeweils mit einem winkelförmigen und dabei von der Belüftungswand abstehenden Flansch versehen, der die angrenzende Seitenwand des Düsenkastens außenliegend übergreift, sodass auch hier kein Öl ins Innere des Düsenkastens gelangen kann.

Sofern der Düsenkasten aufgrund seiner großen Länge aus zumindest zwei oder mehreren Teilen besteht, die in Längsrichtung zusammengebaut werden, sind hier (neben bevorzugt überlappenden Wandabschnitten) an der Belüftungswand spezifische erhabene Belüftungswand-Randabschnitte zusätzlich vorgesehen, sodass auch hier keine von der Ober- oder Außenseite in das Innere des Düsenkastens verlaufende Schlitze ausgebildet sind, die auf der Ebene der Oberseite oder Oberfläche der Belüftungsöffnungen enden, worüber Öl ins Innere des Düsenkastens eindringen könnte.

Die erwähnten Erhebungsabschnitte und dabei vor allem deren Höhe können im Rahmen der Erfindung sehr gering dimensioniert werden.

Schließlich kann der erwähnte Erhebungsabschnitt auch so ausgebildet sein, dass in dem erhabenen Plateau nicht nur eine Belüftungsöffnung, sondern beispielsweise zwei Belüftungsöffnungen (oder noch mehr) ausgebildet sind. Mit anderen Worten muss nicht für jede Belüftungsöffnung eine eigenständige separate Erhebung ausgebildet sein. Weitere Vorteile, Einzelheiten und Merkmale der Erfindung ergeben sich nachfolgend aus den anhand von Zeichnungen dargestellten Ausführungsbeispielen.

Dabei zeigen im Einzelnen:
- Figur 1:: eine schematische räumliche Darstellung eines erfindungsgemäßen Düsenkastens;
- Figur 2:: eine schematische Querschnittsdarstellung in Querrichtung und senkrecht zur Längsrichtung des in Figur 1 gezeigten Düsenkastens;
- Figur 3:: eine vergrößerte Detaildarstellung einer Belüftungsöffnung im Bereich einer Erhebung im Querschnitt, die an einer Belüftungswand des in Figur 1 und 2 gezeigten Düsenkastens ausgebildet ist;
- Figur 4:: eine auszugsweise räumliche Darstellung zweier benachbart zueinander liegender Erhebungen mit darin ausgebildeten Belüftungsöffnungen;
- Figur 5:: ein zu Figur 3 und 4 leicht abgewandeltes Ausführungsbeispiel;
- Figur 6a bis 6c:: drei auszugsweise senkrechte Querschnittsdarstellungen in Längsrichtung zweier Düsenkanal-Abschnitte, die in diesen Bereichen stirnseitig zusammen montierbar sind, und zwar einmal vor dem Zusammenbau, während des stirnseitigen Zusammenschiebens und nach dem erfolgten stirnseitigen Zusammenbau zweier Düsenkästen;
- Figur 7a bis 7c:: drei verschiedene Beispiele in Draufsicht zur Erläuterung, wie Belüftungsöffnungen unterschiedlich ausgebildet bzw. ausgerichtet sein können;
- Figur 8:: eine schematische Ansicht von einem Belüftungsmodul mit vier erfindungsgemäßen Düsenkästen, die in paralleler Ausrichtung und mit Seitenversatz in Abzugsrichtung einer Materialbahn versetzt zueinander angeordnet sind; und
- Figur 9:: eine schematische stirnseitige Ansicht mehrerer in Abzugsrichtung einer Kunststofffolienbahn oberhalb und unterhalb dieser Materialbahn angeordneter Düsenkästen, wobei zwischen den unterhalb der Materialbahn angeordneten Düsenkästen Abfluss- und/oder Auffangbehälter zum Aufsammeln des Öls angeordnet sind.

Nachfolgend wird auf ein erstes Ausführungsbeispiel eines erfindungsgemäßen Düsenkastens Bezug genommen.

Dieser Düsenkasten 1 weist eine Längsrichtung L, eine Querrichtung Q und eine Höhe H auf. Er ist im Querschnitt rechteckförmig gestaltet, obgleich diese Querschnittsform nicht zwingend ist.

Der gezeigte Düsenkasten 1 weist somit also im Ausführungsbeispiel einen Boden 3a und zwei gegenüberliegende Seitenwände 3b auf, die im gezeigten Ausführungsbeispiel mit Seitenversatz parallel zueinander verlaufen und dabei senkrecht zum Boden 3a ausgerichtet sind. Oberhalb des Bodens 3a ist in einem Abstand H gegenüber dem Boden 3a eine sogenannte Belüftungs- oder Düsenwand 5 vorgesehen.

Die erwähnten Seitenwände 3b und der Boden 3a sowie die Belüftung- oder Düsenwand 5 umgeben somit einen Innenraum 2, der auch als Zuführkammer 4 zur Zuführung von Luft bezeichnet wird, die dann durch die nachfolgend noch erörterten Belüftungsöffnungen austreten kann. Im gezeigten Ausführungsbeispiel weist somit der Düsenkasten 1 wie erwähnt eine rechteckige Querschnittsform auf, obgleich auch andere Querschnittsformen möglich sind. So können auch die Seitenwände gebogen ausgebildet sein und kontinuierlich in einen beispielsweise ebenfalls im Querschnitt gekrümmt verlaufenden Boden übergehen, ohne dass die Seitenwände durch klare Kanten vom Boden getrennt sind. Auf die spezifische Form des Querschnitts des Düsenkastens kommt es insoweit im Rahmen der Erfindung also nicht an.

In der in Längsrichtung L verlaufenden Belüftungs- oder Düsenwand 5 sind eine Vielzahl von Belüftungsöffnungen 7 ausgebildet, die nachfolgend unabhängig von ihrer spezifischen Öffnungsform (also beispielsweise als rundliche, schlitzförmige, quadratische Öffnung etc.) teilweise auch als Düsenöffnungen oder Belüftungsöffnungen oder allgemein als Öffnungen 7 bezeichnet werden. In dem gezeigten Ausführungsbeispiel sind diese Belüftungsöffnungen 7 nicht nur in Längsrichtung L in der Belüftung- oder Düsenwand 5 versetzt zueinander liegend ausgebildet, sondern auch in mehreren in Querrichtung Q versetzt zueinander liegenden Reihen R. Dabei wird an dieser Stelle bereits angemerkt, dass die Form dieser Belüftungsöffnungen, wie die Anordnung in Längsrichtung L und in Querrichtung Q auch, beliebig vom gezeigt Ausführungsbeispiel abweichen kann, diese Belüftungsöffnungen 7 also nicht zwingend in fest vorgegebenen Reihen R zueinander angeordnet sein müssen.

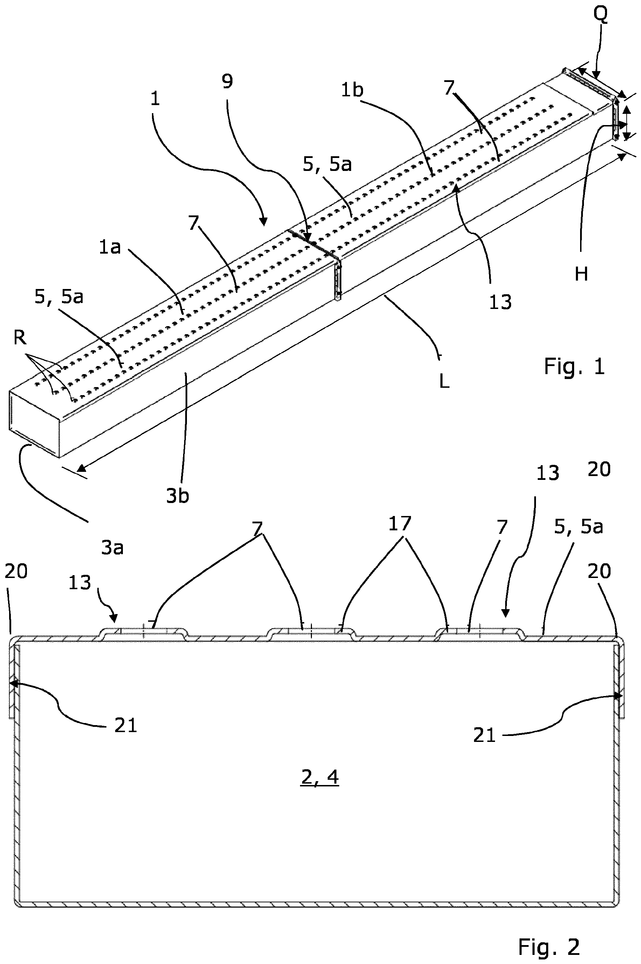

Aus dem gezeigten Ausführungsbeispiel nach Figur 1 ist schon zu ersehen, dass der Düsenkasten 1 aus zwei in Längsrichtung L geteilten Düsenkastenabschnitten 1a und 1b besteht oder bestehen kann, die an einer so gebildeten Schnittstelle 9 zur Vergrößerung der Gesamtlänge an ihren aufeinander zuweisenden Stirnseiten zumindest mittelbar aneinander befestigt und/oder zusammengefügt sind, insbesondere an dieser Schnittstelle 9 vor Ort zusammengebaut werden können.

Anhand von Figur 2 ist ein schematischer Querschnitt in Querrichtung Q und dabei senkrecht zur Längsrichtung L durch den Düsenkasten 1 wiedergegeben.

Daraus ist zu ersehen, dass die Belüftungsöffnungen 7 in der Belüftungs- oder Düsenwand 5 in Form von Erhebungen 13 oder im Bereich derartiger Erhebungen 13 vorgesehen bzw. ausgebildet sind. Da die Belüftungswand 5 aus einem Metallblech besteht und der Düsenkasten 1 vorzugsweise aus einem Blech, insbesondere einem Metallblech besteht, können die so gebildeten Belüftungsöffnungen/Düsenöffnungen 7 und die zugehörigen Erhebungen 13 bevorzugt in einem gemeinsamen gleichzeitig stattfindenden Präge- und Stanzvorgang hergestellt werden.

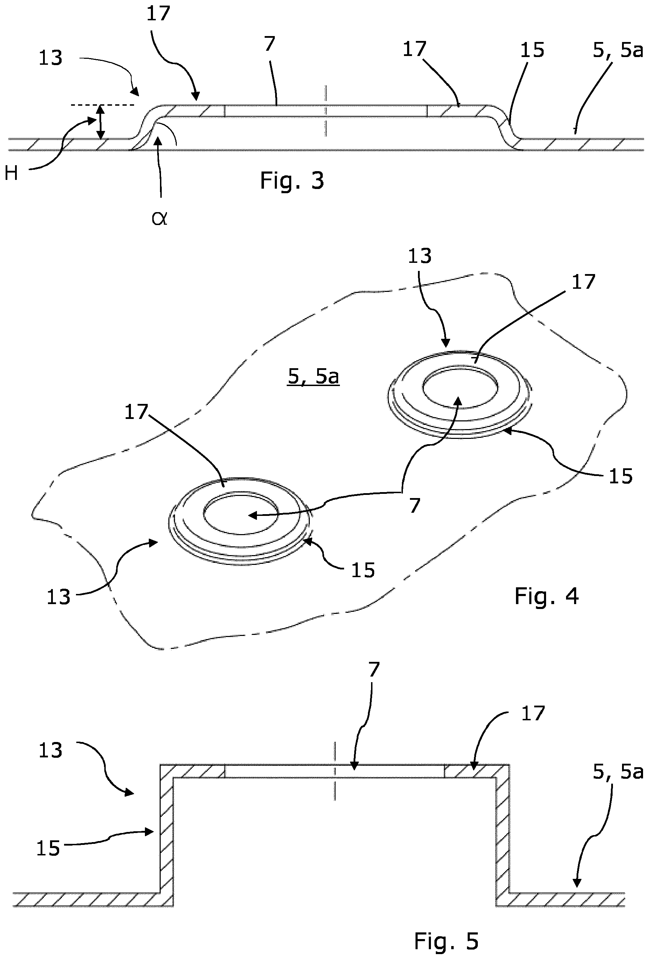

Im gezeigten Ausführungsbeispiel gemäß Figur 2 sowie der vergrößerten Schnittdarstellung durch die Erhebung 13 der Belüftungsöffnung 7 gemäß Figur 3 und der auszugsweisen räumlichen Darstellung zweier Erhebungen 13 gemäß Figur 4, ist die umlaufende äußere Begrenzungswand 15 konisch oder zumindest leicht konisch gebildet.

Diese äußere Begrenzungswand 15 erhebt sich also von der Belüftungswand 5 bzw. der dadurch gebildeten Oberseite oder Oberfläche 5a der Belüftungswand 5 konisch konvergierend, also im gezeigten Ausführungsbeispiel kegelstumpfförmig. Die eigentliche Belüftungsöffnung 7 ist dabei durch einen umlaufenden Öffnungsrand 17 begrenzt, der somit eine stumpfe und damit kraterfreie Abschlussfläche für die Belüftungsöffnungen 7 bildet. Eine sogenannte "kraterfreie" Abschlussfläche ist wichtig, wenn als Materialbahn insbesondere eine Folie oder ein Film in Betracht kommt. Denn selbst bei Berührung des Films mit dem umlaufenden Öffnungsrand 17 im Bereich der Belüftungsöffnungen 7 soll sichergestellt sein, dass der Film nicht durch kraterförmige Ausfransungen des Metalls verletzt oder beschädigt wird oder gar reißt. Im gezeigten Ausführungsbeispiel ist dieser Öffnungsrand 17 zumindest näherungsweise parallel zur Oberseite oder Oberfläche 5a der Düsenwand 5 ausgebildet oder ausgerichtet. Dieser Öffnungsrand 17 muss aber nicht zwingend parallel zur Oberseite oder Oberfläche 5a der Düsenwand 5 ausgerichtet sein. Dieser Öffnungsrand 17 kann im senkrechten Schnitt zur Oberseite 5a auch noch gekrümmt ausgestaltet sein, beispielsweise konvex mit in Richtung Belüftungsöffnungen 7 bevorzugt zunehmend geringerer Winkelabweichung gegenüber der Oberseite oder Oberfläche 5a.

Ebenso könnte der Öffnungsrand 17 bevorzugt mit zumindest einem geringen Winkel gegenüber der Oberseite oder Oberfläche 5a der Düsenwand 5 ausgerichtet sein. Somit kann dieser Öffnungsrand 17 mit geringem Winkel gegenüber der Ebene der Oberfläche 5a von seinem äußeren Rand zur eigentlichen Belüftungsöffnung 7 hin ansteigen, beispielsweise im Winkel von kleiner 45°, kleiner 30°, 25°, 20°, 15°, 10° oder kleiner als 5°.

Die Höhe H der Erhebung 13 kann sehr gering dimensioniert sein, beispielsweise zwischen 0,5 mm und 10 mm liegen. Auch die Breite des umlaufenden Öffnungsrandes 17 kann in gleicher Größenordnung ausgebildet sein.

Die leicht konisch divergierende Ausbildung der Erhebungen 13 wird bevorzugt, da diese Erhebungen 13 mittels eines Prägevorganges erzeugt werden. Bevorzugt werden die Erhebungen 13 aber in einem Bearbeitungsschritt mit den Belüftungsöffnungen 7 gemeinsam oder gleichzeitig hergestellt, beispielsweise durch einen Präge- und Stanzvorgang..

Anhand von Figur 5 ist abweichend zu Figur 3 gezeigt, dass die umlaufende äußere Begrenzungswand 15 grundsätzlich auch zylindrisch ausgebildet sein könnte, wobei auch in diesem Ausführungsbeispiel zumindest eine noch leichte konische Gestaltung bevorzugt ist, die insbesondere von der Oberseite 5a der Düsenwand 5 leicht konisch divergierend verläuft. Der Neigungswinkel α (zwischen der konisch geneigten Begrenzungswand 15 und der Ebene der zugehörigen Belüftungswand 5 - Figur 3) kann von daher zur Vermeidung einer zylindrischen Ausgestaltung weniger als 90° aufweisen, also beispielsweise 89,75° und weniger betragen, insbesondere also weniger als 89,5°, 89,25°, 89°, 88°, 87°, 86°, 85°, 84°, 83°, 82° oder 81° oder 80° sind vorteilhaft. Mit anderen Worten kann dieser Winkel bevorzugt also auch kleiner als 60°, 50°, 45° oder 40° sein, wobei dann allerdings die Kegelausbildung in Richtung Oberfläche der Belüftungswand 5 immer größer wird.

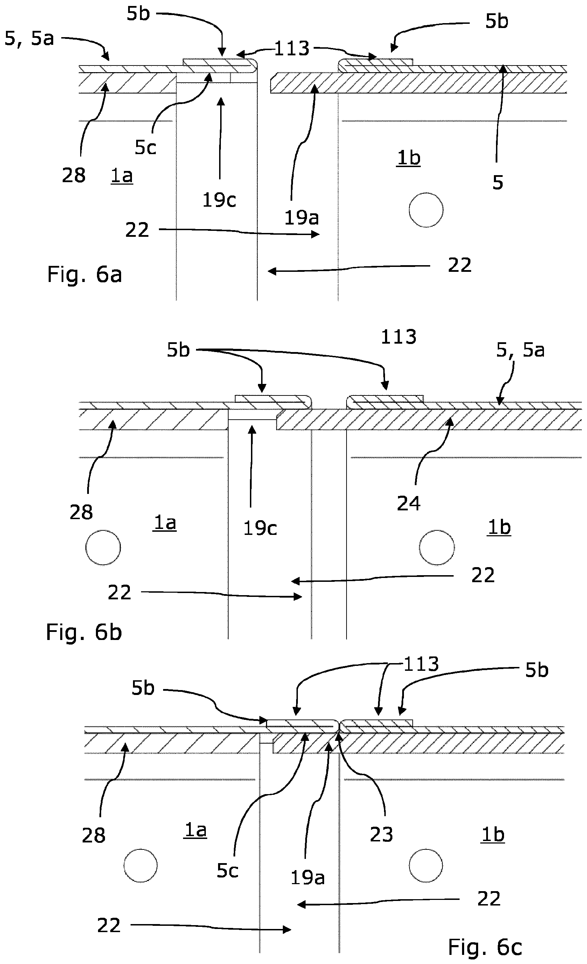

Anhand von Figur 6a bis 6c sind jeweils in einem auszugsweisen Längsschnitt zwei aneinandergrenzende Belüftungswände 5 beispielsweise zweier vor Ort zu montierenden Düsenkästen-Abschnitte 1a und 1b vor ihrem Zusammenbau, während des Zusammenbaus sowie nach dem Zusammenbau wiedergegeben.

Daraus ist zu ersehen, dass die Belüftungswand 5 zumindest in Richtung Stirnseite 22 vorstehend einen Belüftungswand-Randabschnitt 5b aufweist, der entgegengesetzt zur Anbaurichtung mit einem nächsten Düsenkasten umgebördelt ist, also bevorzugt beispielsweise um 180° umgelegt ist, und somit auf der Oberseite 5a der Belüftungswand 5 in Form eines mehr oder weniger schmalen Randstreifens aufliegt. Durch diesen umgelegten Randstreifen wird also eine weitere Erhebung oder ein weiterer Erhebungsabschnitt 113 gebildet, wobei diese Erhebung 113 oder dieser Erhebungsabschnitt 113 einen vom linken zum rechten Seitenrand 20 des Düsenkastens verlaufenden erhabenen Abschnitt bildet, sodass kein Öl über einen zwischen zwei stirnseitig zusammengebauten Düsenkästen bestehenden Schlitz oder Montageschlitz ins Innere des Düsenkastens gelangen kann. Diese Schutzmaßnahme wird noch dadurch verstärkt, dass eine von zwei stirnseitig zusammenzubauenden Belüftungswänden 5 in ihrem stirnseitigen Montagebereich im Inneren des Düsenkastens 1 mit zumindest einer über einen Teil der Längserstreckung des Düsenkastens 1, 1b verlaufenden Materialzunge 19a oder einem Flansch 19a versehen ist. Diese Materialzunge 19a oder dieser Flansch 19a steht in Richtung des angrenzenden nächsten Düsenkastens 1a über und greift in die angrenzende Stirnseite 22 des nächsten Düsenkastens 1 in eine dort ausgebildete Ausnehmung 19c ein. Dadurch ist es möglich, in Längsrichtung zwei aufeinanderfolgende Düsenkästen-Abschnitte 1a und 1b mit überlappenden Wandabschnitten 5 zusammenzubauen. Dabei sind in Figur 6a ausschnittsweise die beiden Stirnseiten der Düsenkästen vor ihrem Zusammenbau gezeigt, in Figur 6b während der axialen Zusammenführung, und in Figur 6c nach dem endgültigen Zusammenfügen, wenn die über die Stirnseite 22 des einen Düsenkastens 1b überstehende Materialzunge oder der überstehende Flansch 19a in die Stirnseite 22 des angrenzenden nächsten Düsenkastens 1b eingreift und eintaucht und dabei die Trennlinie 23 (Figur 6c ) zwischen den jeweils umgelegten Belüftungswand-Randabschnitten 5b oberhalb dieser Materialzunge 19a zu liegen kommt. Dadurch ist der an dieser Stelle noch vorhandene Schlitz 23 zum Innenraum des Düsenkastens überdeckt und abgedichtet.

Dadurch wird die Ausbildung selbst kleinster Schlitze im Montagebereich verhindern, durch die hindurch sich auf der Oberseite 5a der Düsenwand 5 zunächst abscheidendes Öl in den Innenraum 2, also in die Zuführkammer 4 eindringen könnte. Von daher ist auch sichergestellt, dass keine Öltröpfchen durch die stirnseitig dem Düsenkasten 1 zugeführte Luft vom Innenraum 2 mitgenommen und wieder durch die Belüftungsöffnungen 7 in Richtung Kunststofffilm weiter gefördert werden können.

Durch die überlappende Anordnung der Belüftungs- oder Düsenwände 5 in ihrem stirnseitigen Montagebereich wird also gewährleistet, dass sich auf der Oberseite 5a der Düsenwand 5 niederschlagendes Öl nur nach außen - also zu den gegenüberliegenden Längsseiten des Düsenkastens 1 - hin ablaufen und nicht in diese Düsenkästen eindringen kann.

In kritischen Fällen könnte zudem auch noch zusätzlich ein Dichtmittel eingesetzt werden, welches bei der Montage eingebracht wird. Dieses Dichtmittel wäre dann in dem Bereich zwischen der Oberseite der Materialzunge 19a und der darüber befindlichen Unterseite des Wandabschnittes 5e vorzusehen. Der erwähnte Wandabschnitt 5c wäre also jener Bereich, der genau oberhalb des entsprechenden Abschnittes der Materialzunge 19a im endgültig montierten Zustand zu liegen kommt, mit anderen Worten also jener Wandabschnitten 5, der unterhalb des bevorzugt umgebördelten Randabschnitts 5b dem Innenraum 2 des Düsenkastens 1 zugewandt liegt. Bei einer Demontage müsste diese Dichtung dann entfernt (beispielsweise weggekratzt) und bei der erneuten Montage ein neues Dichtmaterial eingebracht werden. Bei dem Dichtmaterial kann es sich beispielsweise um ein Hochtemperatursilikon oder ein dazu ähnliches oder vergleichbares Material handeln, welches die Dichtigkeit auch bei hohen Temperaturen >150°C beibehält.

In der Regel ist aber ein derartiges Dichtmaterial überhaupt nicht notwendig.

Zusätzlich wird darauf hingewiesen, dass beispielsweise auf der Innenseite 2 des Düsenkastens 1 unterhalb der Belüftungs- oder Düsenwand 5 auch noch eine Verstärkung und/oder Aussteifung 28 vorgesehen sein kann aber nicht vorgesehen sein muss, wie dies beispielsweise in die Figuren 6a bis 6c dargestellt ist. Diese Verstärkung und/oder Aussteifung 28 kann beispielsweise wandförmig oder rippen- oder stegförmig gestaltet sein, wobei auch hier alle möglichen Gestaltungsformen in Betracht kommen.

Diesem Ziel dienen auch die anhand von Figur 2 im Querschnitt gezeigten und an den seitlichen Randbereichen 20 der Düsenwand 5 ausgebildeten Randstege 21, die jeweils gegenüber der Belüftungs-/Düsenwand 5 so abgewickelt sind, dass sie die Seitenwände 3a außenliegend übergreifen, also nicht im Innenraum 2 des Düsenkastens zu liegen kommen. Vor allem ist diese Belüftungs-/Düsenwand 5 mit den Belüftungsöffnungen/Düsenöffnungen 7 in Querrichtung Q durchgängig, also beispielsweise nicht zweigeteilt, sodass auch hier nicht zwischen so gebildeten, getrennten Montageteilen Schlitze oder Spalte entstehen können, durch die hindurch beispielsweise das erwähnte und während des Reckvorganges aus dem Kunststofffilm austretende Öl bis in das Innere des Düsenkastens 1 gelangen kann.

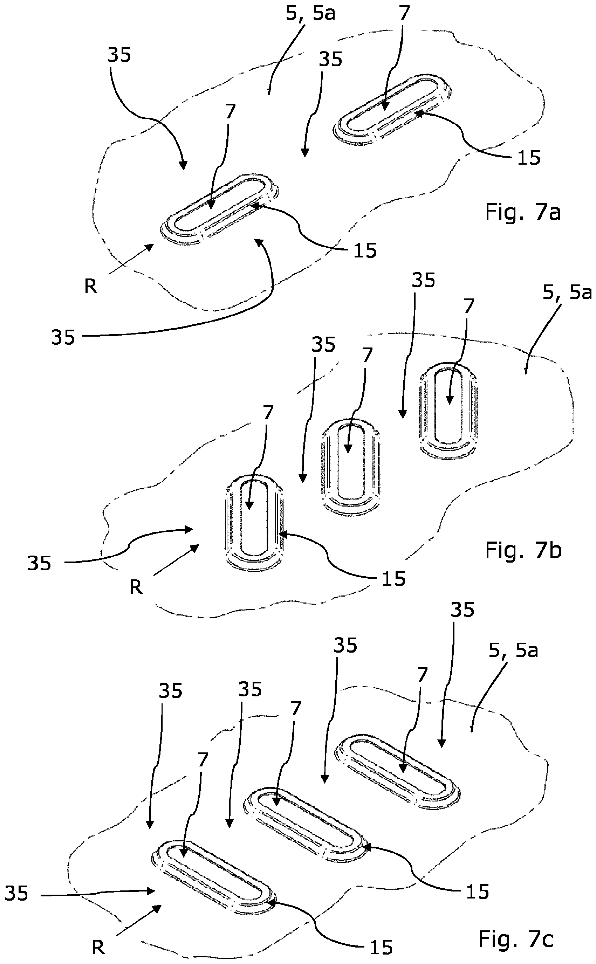

Anhand von Figur 7a ist schematisch in Draufsicht auszugsweise gezeigt, dass die Belüftungsöffnungen 7 auch völlig andere Gestaltungen oder Formen aufweisen können, beispielsweise langlochförmig gestaltet sein können, wobei diese Belüftungsöffnungen 7 ebenfalls wieder in mehreren Reihen R nebeneinander vorgesehen sein können.

Anhand von Figur 7b ist eine ähnliche Ausgestaltung mit Belüftungsöffnungen 7 nach Art von Langlöchern gezeigt, die allerdings in Schräglage, also in einem spitzen Winkel zur Längsrichtung L eines Düsenkastens 1 vorgesehen sein können, beispielsweise mit 45° ± weniger als 10° oder weniger als 25°.

Anhand der Darstellung gemäß Figur 7c ist beispielhaft dargestellt, dass derartige Langlöcher auch in Querrichtung Q, also senkrecht zur Längsrichtung L in der Belüftungswand eines Düsenkastens ausgebildet sein können.

Allen Ausführungsbeispielen gemeinsam ist, dass die Erhebungen 13 (mit der darauf ausgebildeten zumindest einen oder mehreren Belüftungsöffnungen 7) auf der Oberseite 5a der Düsenwand 5 unter Ausbildung von Abständen zueinander vorgesehen sind, derart, dass sich auch benachbart zu den Erhebungen 13 auf der Oberseite oder Oberfläche 5a der Belüftung- oder Düsenwand 5 niederschlagendes Öl zum linken oder rechten Rand des Düsenkastens (also in Querrichtung Q des Düsenkastens) und von dort nach unten hin abfließen kann - zumindest bezüglich der unter dem Kunststofffilm angeordneten Düsenkästen, bei denen die Düsenöffnung nach oben hin zur Unterseite des Kunststofffilms ausgerichtet liegen. Mit anderen Worten bestehen also viele Materialbrücken 35, die sich auf der Oberseite 5a vom linken bis zum rechten Seitenrand der Düsenwände 5 erstrecken, sodass sich auf der Oberseite oder Oberfläche 5a der Belüftung- oder Düsenwand 5 niederschlagendes Öl stets an den Erhebungen 13 vorbei zum Seitenrand des Düsenkastens ablaufen kann.

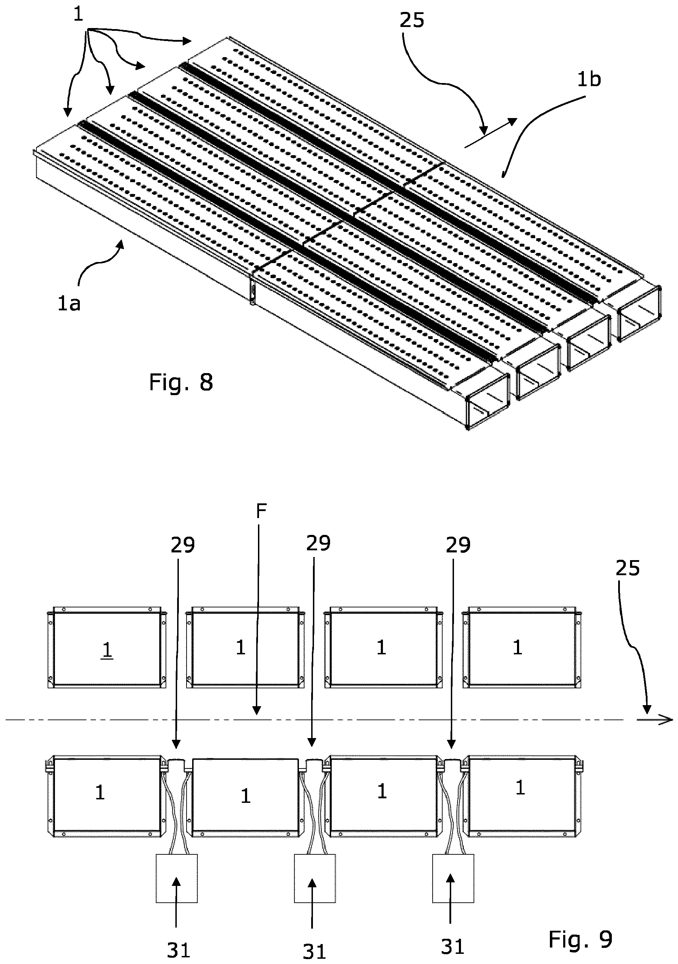

Schließlich wird auf die Darstellung gemäß Figur 8 verwiesen, in der in Querrichtung zur Abzugsrichtung 25 eines Kunststofffilms F angeordnete Düsenkästen zu sehen sind, d.h. deren stirnseitige Ansicht, die in Abzugsrichtung 25 zueinander beanstandet unterhalb des Kunststofffilms F angeordnet sind. Üblicherweise sind entsprechende Düsenkästen in gleichem Abstand in Abzugsrichtung und im gleichen vertikalen Abstand oberhalb des Kontrollfilms/der Materialband ebenfalls angeordnet, und zwar mit ihren Belüftungsöffnungen auf die Oberseite des Kunststofffilms ausgerichteten liegend, wie dies in Figur 9 gezeigt ist.

Anhand von Figur 9 ist nunmehr angedeutet, dass die Düsenkästen 1 seitlich über Abflusseinrichtungen 29 meist in Form von Ölrinnen, verfügen können. Bevorzugt sind diese in einem bestimmten Winkel angeordnet, sodass das Öl optimal ablaufen kann. Somit könnte das Öl in diesen Rinnen aufgefangen werden und über Abläufe im Auffangbehälter 31 gesammelt werden. Zudem könnte man Zwischenbleche zwischen den Düsenkästen einbringen, die dachartig ausführt sind und das Öl auch in Rinnen ableitet. Das hätte den Vorteil, dass das Öl gesammelt werden kann und zudem der Ofenboden nicht mit Öl verschmutzt wird.

Dies wäre insbesondere für einen simultanen Reckprozess (LISIM) denkbar oder sogar erforderlich, weil bei diesem Prozess die Breit- wie auch Längsreckung im Ofen geschieht. Bei einem sequentiellen Reckprozess erfolgt die Längsreckung in einer dem Ofen vorgeschalteten Maschine (MDO). Ein Großteil des Öls wird bereits in der MDO ausgequetscht und gelangt nicht in den Ofen. Deshalb ist zu erwarten, dass bei einem simultanen Reckprozess oder bei einer einem Längsprozess nachfolgenden Querreckstufe, die Problematik der Ölverschmutzung im Ofen nochmals größer ist, und dabei durch die Erfindung ein wesentlicher Vorteil erzielt werden kann.

## Patentansprüche

1. Düsenkasten mit folgenden Merkmalen:
- mit zueinander beabstandeten Seitenwänden (3b), einem Boden (3a) und einer dazu beabstandeten Belüftungswand (5), wodurch ein Innenraum (2) gebildet ist,
- in der Belüftungswand (5) ist eine Vielzahl von versetzt zueinander angeordneten Belüftungsöffnungen (7) vorgesehen,
- der Düsenkasten (1) ist an seiner Belüftungswand (5) mit einer Vielzahl von Erhebungen (13) versehen, die sich mit zumindest einer Höhe (H) gegenüber den benachbart zu den Erhebungen (13) liegenden Abschnitten der Belüftungswand (5) oder der Oberseite oder Oberfläche (5a) der Belüftungswand (5) erheben, wobei die Erhebungen (13) aus Einprägungen in der aus einem Metallblech bestehenden Belüftungswand (5) gebildet sind,
- die Belüftungsöffnungen (7) sind im Bereich der Erhebungen (13) gegenüber der Oberseite oder Oberfläche (5a) der Belüftungswand (5) so versetzt liegend angeordnet und ausgebildet, dass sie gegenüber dem Innenraum (2) entfernter liegen als die Oberseite oder Oberfläche (5a) der Belüftungswand (5) benachbart zu den Erhebungen (13),
und/oder
die Belüftungswand (5) weist in Querrichtung (Q) des Düsenkastens (1) gegenüberliegende Seitenflansche (21) auf, die die Seitenwände (3b) des Düsenkastens (1) außerhalb des Innenraums (2) des Düsenkastens (1) übergreifen.

2. Düsenkasten nach Anspruch 1, **dadurch gekennzeichnet, dass** die Erhebungen (13) eine um jeweils eine oder um zumindest zwei oder mehrere Belüftungsöffnungen (7) herum verlaufende Begrenzungswand (15) umfassen, die in Querschnittsdarstellung zumindest abschnittsweise in einem spitzen Neigungswinkel α und/oder zumindest abschnittsweise senkrecht zur Belüftungswand (5) vom Innenraum (2) weg gerichtet verläuft.

3. Düsenkasten nach Anspruch 2, **dadurch gekennzeichnet, dass** der Neigungswinkel α kleiner als 90° ist, insbesondere kleiner als 89,75° oder kleiner als 89,5°, 89,25°, 89°, 88°, 87°, 86°, 85°, 84°, 83°, 82°, 81°, 80°, 70°, 60°, 50°, 45° oder 40°, und vorzugsweise größer ist als 50°, insbesondere größer ist als 60°, 70°, 80°, 81°, 82°, 83°, 84°, 85°, 86°, 87°, 88°, 89°, 89,25° oder größer ist als 89,5°.

4. Düsenkasten nach Anspruch 1, 2 oder 3, **dadurch gekennzeichnet, dass** die Erhebungen (13) zumindest in einer Teilhöhe in einer vom Innenraum (2) weg verlaufenden Richtung konisch konvergierend ausgebildet sind.

5. Düsenkasten nach Anspruch 1, 2, 3 oder 4, **dadurch gekennzeichnet, dass** der zur Oberseite oder Oberfläche (5a) der Belüftungswand (5) entfernt liegende Endabschnitt der Erhebung (13) kraterfrei und/oder stumpf ausgebildet ist, vorzugsweise in Form eines die jeweilige Belüftungsöffnung (7) umgebenden Öffnungsrandes(17), der insbesondere parallel zur Oberseite oder Oberfläche (5a) der Belüftungswand (5) ausgerichtet ist oder weniger als 45°, insbesondere weniger als 30°, 20° oder weniger als 10° oder 5° davon abweicht.

6. Düsenkasten nach einem der Ansprüche 1 bis 5, **dadurch gekennzeichnet, dass** die Erhebung (13) eine Höhe gegenüber der Oberseite oder Oberfläche (5a) der Belüftungswand (5) aufweist, die größer ist als 0,5 mm oder größer ist als 1,0 mm, 1,5 mm, 2,0 mm, 2,5 mm, 3,0 mm, 3,5 mm, 4,0 mm oder 4,5 mm, und/oder dass die Erhebung (13) eine Höhe gegenüber der Oberseite oder Oberfläche (5a) der Belüftungswand (5) aufweist, die kleiner ist als 5,0 mm oder kleiner ist als 4,5 mm,, 0 mm, 3,5 mm, 3,0 mm, 3,5 mm, 2,0 mm, 1,5 mm oder 1 mm.

7. Düsenkasten nach einem der Ansprüche 1 bis 6, **dadurch gekennzeichnet, dass** die Belüftungsöffnungen (7) oder zumindest ein Teil der Belüftungsöffnungen (7) in Draufsicht kreisförmig oder langlochförmig oder n-polygonal ausgebildet sind, und dass die Erhebungen (13) mit den darin bevorzugt mittig sitzenden Belüftungsöffnungen (7) in Draufsicht eine Form aufweisen, die der Form der Belüftungsöffnungen (7) entspricht oder dazu ähnlich ist.

8. Düsenkasten nach einem der Ansprüche 1 bis 7, **dadurch gekennzeichnet, dass** die Belüftungsöffnungen in Längsrichtung (L) des Düsenkastens in einer oder in mehreren in Querrichtung (Q) des Düsenkastens (1) vorgesehenen Reihen (A) so beabstandet angeordnet oder ausgebildet sind, dass die beiden Seitenränder (20) der Belüftungswand (5) über Materialbrücken (35) miteinander verbunden sind.

9. Düsenkasten nach einem der Ansprüche 1 bis 8, **dadurch gekennzeichnet, dass** zumindest zwei Belüftungsöffnung (7) in einer gemeinsamen Erhebung (13) angeordnet sind, die von einer gemeinsam umlaufenden Begrenzungswand (15) umgeben sind.

10. Düsenkästen nach einem der Ansprüche 1 bis 9, **dadurch gekennzeichnet, dass** die Belüftungswand (5) im Bereich zumindest einer ihrer Stirnseiten (22) einen stirnseitig überstehenden Belüftungswand-Randabschnitt (5b) aufweist, der aus der Ebene der Belüftungswand (5) entgegengesetzt zum Innenraum (2) weggebogen und bevorzugt auf die Oberseite (5a) der Belüftungswand (5) aufliegend umgebogen oder umgebördelt ist, wodurch eine gegenüber der Oberseite oder Oberfläche (5a) der Belüftungswand (5) vorstehende und/oder höher liegende, vorzugsweise streifenförmige Erhebung (113) gebildet ist.

11. Düsenkasten nach einem der Ansprüche 1 bis 10, **dadurch gekennzeichnet, dass** der Düsenkasten (1) in dessen Längsrichtung (L) aus zumindest zwei Düsenkasten-Abschnitten (1; 1a, 1b) besteht, wobei zumindest ein Düsenkasten-Abschnitt (1a oder 1b) auf der Innenseite der Belüftungswand (5) mit einer in Anbaurichtung verlaufenden Materialzunge oder einem Flansch (24) versehen ist, die bzw. der aus der zugehörigen Stirnseite (22) des Düsenkasten-Abschnitts (1a oder 1b) stirnseitig vorsteht und in eine entsprechende Ausnehmung (19c) in dem angrenzenden nächsten Düsenkasten (1; 1b oder 1a) eingreift und dabei einen gegebenenfalls zwischen den beiden aneinander angrenzenden umgebördelten Belüftungswand-Randabschnitten (5b) bestehenden Spalt (23) im Inneren (2) des Düsenkastens (1) überdeckt und gegenüber den Innenraum (2) des Düsenkastens (5) abdichtet.

12. Reckanlage mit einem Düsenkasten nach zumindest einem der Ansprüche 1 bis 11.

13. Reckanlage nach Anspruch 12, **dadurch gekennzeichnet, dass** mehrere Düsenkästen (1) in Abzugsrichtung (A) eines Kunststofffilms (F) unterhalb des Kunststofffilms (F) versetzt zueinander angeordnet sind, und dass zwischen zumindest zwei in Abzugsrichtung (A) versetzt zueinander angeordneten Düsenkästen (1) eine Abflusseinrichtung (29) und/oder Aufnahmeeinrichtung (29) insbesondere in Form von Auffangbehälter für das von der Oberseite oder Oberfläche (5a) der Belüftungswand (5) abfließende Öl vorgesehen ist.

## Claims

1. Nozzle box having the following features:
- side walls (3b) spaced apart from each other, a base (3a) and a ventilation wall (5) spaced apart from it, thereby forming an interior space (2),
- a plurality of ventilation openings (7) arranged offset to each other is provided in the ventilation wall (5),
- the nozzle box (1) is provided on its ventilation wall (5) with a plurality of protrusions (13) that are raised by at least a height (H) in relation to the sections of ventilation wall (5) or the top side or surface (5a) of the ventilation wall (5), said sections being situated adjacent to the protrusions (13), wherein the protrusions (13) are formed by embossing into the ventilation wall (5) made of a metal sheet,
- the ventilation openings (7) are arranged and configured in the region of the protrusions (13) in relation to the top side or surface (5a) of the ventilation wall (5) positioned offset to each other in such a way that they are further away in relation to the interior space (2) than the top side or surface (5a) of the ventilation openings (5) adjacent to the protrusions (13), and/or
the ventilation wall (5) comprises in the transverse direction (Q) of the nozzle box (1) opposing side flanges (21) that overlap the side walls (3b) of the nozzle box (1) outside the interior space (2) of the nozzle box (1).

2. Nozzle box according to claim 1, **characterized in that** the protrusions (13) comprise a boundary wall 15 extending around each one or around at least two or more ventilation openings (7), said boundary wall (15) extending at an acute angle of inclination α in the cross-sectional view at least in part and/or aligned at least in part perpendicular to the ventilation wall (5) away from the interior space (2).

3. Nozzle box according to claim 2, **characterized in that** the angle of inclination α is less than 90°, in particular less than 89.75° or less than 89.5°, 89.25°, 89°, 88°, 87°, 86°, 85°, 84°, 83°, 82°, 81°, 80°, 70°, 60°, 50°, 45° or 40°, and primarily is greater than 50°, in particular greater than 60°, 70°, 80°, 81°, 82°, 83°, 84°, 85°, 86°, 87°, 88°, 89°, 89.25° or is greater than 89.5°.

4. Nozzle box according to claim 1, 2, or 3, **characterized in that** the protrusions (13) are configured converging conically at least in a partial height in a direction extending away from the interior space (2).

5. Nozzle box according to claim 1, 2, 3 or 4, **characterized in that** the end section of the protrusion (13) situated away from the top side or surface (5a) of the ventilation wall (5) is configured to be crater-free and/or blunt, primarily in the form of an opening edge (17) surrounding the corresponding ventilation opening (7), said opening edge (17) being aligned in particular parallel to the top side or surface (5a) of the ventilation wall (5) or deviates from it less than 45°, in particular less than 30°, 20° or less than 10° or 5°.

6. Nozzle box according to any one of the claims 1 to 5, **characterized in that** the protrusion (13) comprises a height in relation to the top side or surface (5a) of the ventilation wall (5) that is greater than 0.5 mm or is greater than 1.0 mm, 1.5 mm, 2.0 mm, 2.5 mm, 3.0 mm, 3.5 mm, 4.0 mm or 4.5 mm, and/or the protrusion (13) comprises a height in relation to the top side or surface (5a) of the ventilation wall (5) that is less than 5.0 mm or less than 4.5 mm, 4.0 mm, 3.5 mm, 3.0 mm, 3.5 mm, 2.0 mm, 1.5 mm or 1 mm.

7. Nozzle box according to any one of the claims 1 to 6, **characterized in that** the ventilation openings (7) or at least a part of the ventilation openings (7) in top view are configured circular or oblong or n-polygonal in shape and that the protrusions (13) comprising ventilation openings (7) positioned preferably centrally therein comprise a shape in top view that corresponds to the shape of the ventilation openings (7) or is similar to this.

8. Nozzle box according to any one of the claims 1 to 7, **characterized in that** the ventilation openings are arranged or configured spaced apart in the longitudinal direction L of the nozzle box in one or in several rows provided in the transverse direction (Q) of the nozzle box (1) in such a way that the two lateral edges (20) of the ventilation wall (5) are connected to each other via bridges of material (35).

9. Nozzle box according to any one of the claims 1 to 8, **characterized in that** at least two ventilation openings (7) are arranged in a shared protrusion (13) that are surrounded by a shared encircling boundary wall (15).

10. Nozzle box according to any one of the claims 1 to 9, **characterized in that** the ventilation wall (5) comprises an ventilation wall edge section (5b) protruding on the end face in the region of at least one of its end faces (22), said ventilation wall edge section (5b) protruding on the end face being bent from the plane of the ventilation wall (5) opposite the interior space (2) and preferably resting bent over or flanged on the top side (5a) of the ventilation wall (5), thereby forming a mainly strip-shaped protrusion (113) protruding in relation to the top side or surface (5a) of the ventilation wall (5) and/or situated higher.

11. Nozzle box according to any one of the claims 1 to 10, **characterized in that** the nozzle box (1) in its longitudinal direction (L) comprises at least two nozzle box sections (1; 1a, 1b), wherein at least one nozzle box section (1a or 1b) is provided on the inner side the ventilation wall (5) with a material tongue extending in the assembly direction or a flange (24) that protrudes on its end face from the corresponding end face (22) of the nozzle box section (1a or 1b) and is received into a corresponding recess (19c) in the adjoining next nozzle box (1; 1b or 1a) and in doing so covers a gap (23) existing optionally between the two flanged ventilation wall edge sections (5b) adjoining each other in the interior (2) of the nozzle box (1) and seals said gap (23) in relation to the interior space (2) of the nozzle box (5).

12. Stretching unit comprising a nozzle box according to at least one of the claims 1 to 11.

13. Stretching unit according to claim 12, **characterized in that** the several nozzle boxes (1) arranged offset to each other in the drawing direction (A) of a plastics film (F) underneath the plastics film (F), and that a drainage device (29) and/or a receiving device (29), in particular in the form a collection container, for the oil flowing away from the top side or surface 5a of the ventilation wall (5), is provided between at least two nozzle boxes located offset to each other in the drawing direction (A).

## Revendications

1. Boîte à buses présentant les particularités suivantes :
- elle comporte des parois latérales (3b) espacées, un fond (3a) et une paroi de ventilation (5) espacée de ce dernier, formant ainsi un espace intérieur (2),
- une pluralité d'ouvertures de ventilation (7) disposées de manière décalée les unes par rapport aux autres sont prévues dans la paroi de ventilation (5),
- la boîte à buses (1) est dotée, sur sa paroi de ventilation (5), d'une pluralité de reliefs (13) qui sont en élévation selon au moins une hauteur (H) par rapport aux sections de paroi de ventilation (5) voisines desdits reliefs (13) ou par rapport à la face supérieure ou surface (5a) de la paroi de ventilation (5), lesdits reliefs (13) étant formés par des bossages réalisés dans la paroi de ventilation (5) faite en tôle,
- les ouvertures de ventilation (7) sont disposées et conçues dans la zone des reliefs (13) en étant déportées par rapport à la face supérieure ou surface (5a) de la paroi de ventilation (5), de façon à être plus éloignées de l'espace intérieur (2) que ne l'est la face supérieure ou surface (5a) de la paroi de ventilation (5) voisine desdits reliefs (13),
et/ou
la paroi de ventilation (5) présente des rebords latéraux (21) opposés, dans la direction transversale (Q) de la boîte à buses (1), lesquels chevauchent les parois latérales (3b) de la boîte à buses (1) hors dudit espace intérieur (2) de la boîte à buses (1).

2. Boîte à buses selon la revendication 1, **caractérisée en ce que** les reliefs (13) comprennent une paroi de délimitation (15) qui s'étend autour d'une ou d'au moins deux ou de multiples ouvertures de ventilation (7) et qui, vue en coupe transversale, s'éloigne dudit espace intérieur (2) au moins partiellement selon un angle d'inclinaison α aigu et/ou au moins partiellement perpendiculairement à la paroi de ventilation (5).

3. Boîte à buses selon la revendication 2, **caractérisée en ce que** l'angle d'inclinaison α est inférieur à 90°, notamment inférieur à 89,75° ou inférieur à 89,5°, 89,25°, 89°, 88°, 87°, 86°, 85°, 84°, 83°, 82°, 81°, 80°, 70°, 60°, 50°, 45° ou 40°, et est de préférence supérieur à 50°, notamment supérieur à 60°, 70°, 80°, 81°, 82°, 83°, 84°, 85°, 86°, 87°, 88°, 89°, 89,25° ou supérieur à 89,5°.

4. Boîte à buses selon la revendication 1, 2 ou 3, **caractérisée en ce que** les reliefs (13) sont conçus pour converger de manière conique au moins sur une hauteur partielle dans une direction s'éloignant de l'espace intérieur (2).

5. Boîte à buses selon la revendication 1, 2, 3 ou 4, **caractérisée en ce que** la partie terminale du relief (13) éloignée de la face supérieure ou surface (5a) de la paroi de ventilation (5) est conçue sans cratère et/ou non pointue, de préférence sous la forme d'un bord d'ouverture (17) entourant l'ouverture de ventilation (7) respective et aligné notamment parallèlement à la face supérieure ou surface (5a) de la paroi de ventilation (5) ou en s'en écartant selon un angle de moins de 45°, notamment moins de 30°, 20° ou moins de 10° ou 5°.

6. Boîte à buses selon l'une des revendications 1 à 5, **caractérisée en ce que** le relief (13) a une hauteur, par rapport à la face supérieure ou surface (5a) de la paroi de ventilation (5), qui est supérieure à 0,5 mm ou supérieure à 1,0 mm, 1,5 mm, 2,0 mm, 2,5 mm, 3,0 mm, 3,5 mm, 4,0 mm ou 4,5 mm, et/ou le relief (13) a une hauteur, par rapport à la face supérieure ou surface (5a) de la paroi de ventilation (5), qui est inférieure à 5,0 mm ou inférieure à 4,5 mm, 4,0 mm, 3,5 mm, 3,0 mm, 3,5 mm, 2,0 mm, 1,5 mm ou 1 mm.

7. Boîte à buses selon l'une des revendications 1 à 6, **caractérisée en ce que** les ouvertures de ventilation (7) ou au moins certaines des ouvertures de ventilation (7) sont circulaires ou allongées ou n-polygonales, vues en plan, et **en ce que** les reliefs (13) comportant les ouvertures de ventilation (7) de préférence en leur centre, ont, vus en plan, une forme qui correspond ou est similaire à celle des ouvertures de ventilation (7).

8. Boîte à buses selon l'une des revendications 1 à 7, **caractérisée en ce que** les ouvertures de ventilation sont disposées ou conçues, dans la direction longitudinale (L) de la boîte à buses, en une ou plusieurs rangées (A) prévues espacées dans la direction transversale (Q) de la boîte à buses (1), de telle façon que les deux bords latéraux (20) de la paroi de ventilation (5) sont reliés par des ponts de matière (35).

9. Boîte à buses selon l'une des revendications 1 à 8, **caractérisée en ce qu'**au moins deux ouvertures de ventilation (7) sont disposées dans un même relief (13) entouré d'une même paroi de délimitation (15).

10. Boîte à buses selon l'une des revendications 1 à 9, **caractérisée en ce que** la paroi de ventilation (5) présente, au niveau d'au moins une de ses terminaison frontales (22), une section de bord (5b) en saillie frontale qui, à partir du plan de la paroi de ventilation (5), est recourbée à l'opposé de l'espace intérieur (2) et est de préférence rabattue voire repose contre la face supérieure (5a) de la paroi de ventilation (5), moyennant quoi il est formé un relief (113) de préférence laminaire qui fait saillie et/ou est surélevé par rapport à la face supérieure ou surface (5a) de la paroi de ventilation (5).

11. Boîte à buses selon l'une des revendications 1 à 10, **caractérisée en ce que** ladite boîte à buses (1), dans sa direction longitudinale (L), est constituée d'au moins deux sections de boîte à buses (1 ; 1a, 1b), au moins une section de boîte à buses (1a ou 1b) étant pourvue, sur l'intérieur de la paroi de ventilation (5), d'une languette de matériau ou d'une bride (24) s'étendant dans le sens du montage et qui, frontalement, dépasse de la face frontale (22) correspondante de ladite section de boîte à buses (1a ou 1b) et qui pénètre dans un évidement (19c) correspondant ménagé dans la boîte à buses (1 ; 1b ou 1a) contiguë et recouvre ainsi un écart (23) dans l'intérieur (2) de la boîte à buses (1), susceptible d'être présent entre les deux sections de bord (5b) de la paroi de ventilation qui sont rabattues l'une à côté de l'autre, pour ainsi assurer l'étanchéité vis-à-vis de l'espace intérieur (2) de la boîte à buses (5).

12. Système d'étirage de film comportant une boîte à buses selon l'une au moins des revendications 1 à 11.

13. Système d'étirage de film selon la revendication 12, **caractérisé en ce que** plusieurs boîtes à buses (1) sont disposées décalées les unes par rapport aux autres dans le sens de sortie (A) d'un film plastique (F), en dessous dudit film plastique (F), et **en ce qu'**il est prévu, entre au moins deux boîtes à buses (1) disposées décalées l'une par rapport à l'autre dans le sens de sortie (A), un dispositif d'évacuation (29) et/ou un dispositif de réception (29) notamment sous la forme d'un récipient collecteur pour l'huile qui s'écoule de la face supérieure ou surface (5a) de la paroi de ventilation (5).
